# EUROPÄISCHE PATENTANMELDUNG

(11) **EP 2 213 832 A2**
(43) Veröffentlichungstag der Anmeldung: **04.08.2010**
(21) Anmeldenummer: 10000028.0
(22) Anmeldetag: 05.01.2010
(51) Int. Cl.: E21B 43/16, B09C 1/00

(54) **Verfahren zur Injektion eines Fluides**

(30) Priorität: 29.01.2009 DE 102009006572; 29.01.2009 DE 102009006571
(71) Anmelder: Linde Aktiengesellschaft, 80331 München (DE)
(72) Erfinder: Heisel, Michael, Dr., 82049 Pullach (DE); Ernst, Werner, Prof.Dr., 72072 Tübingen (DE); Pias-Peleteiro, Paula, 80636 München (DE)

(57) **Zusammenfassung**

Die Erfindung beschreibt ein Verfahren sowie eine Vorrichtung zur Injektion eines Fluides in eine Gesteins- oder Erdschicht (2), wie beispielsweise einer Erdöl-haltigen Gesteins- oder Erdschicht (2) zur tertiären Erdölförderung, mittels einer geeigneten Leitung (1), wobei die Leitung (1) in die Gesteins- oder Erdschicht (2) eingebracht wird. Die Leitung 1 besteht aus einem Innenrohr 1a und einem Außenrohr 1 b. Das Innenrohr 1a ist mit Injektionsdüsen 3 versehen. Die Injektionsdüsen 3 sind gerichtet und gewährleisten somit über die Öffnungen 5 im Außenrohr 1 b ein gerichtetes Einpressen des Fluides in die umgebende Gesteins- oder Erdschicht 2. Im Inneren des Innenrohres 1a befinden sich Mittel (nicht dargestellt) die eine selektive Beaufschlagung der einzelnen Injektionsdüsen 3 erlauben. Gemäß der Erfindung wird das Fluid gerichtet in die umgebende Gesteins- oder Erdschicht eingepresst. So können zum Beispiel nur alle in der Zeichnung nach rechts gerichtet dargestellten Injektionsdüsen 3 mit dem Fluid beaufschlagt werden. Alternativ können die Öffnungen 5 über den Injektionsdüsen 3 auch mittels der Packer 4 blockiert bzw. freigelassen werden. In dieser Ausgestaltung der Erfindung sind die Packer 4 aufblasbare Gassäcke. Diese können im unaufgeblasenen Zustand frei über das Außenrohr 1 b bewegt werden. Im aufgeblasenen Zustand füllen sie den Raum zwischen Außenrohr 1b und Gesteins- oder Erdschicht 2 aus und blockieren dabei die Öffnungen 5 über den Injektionsdüsen 3. Auf diese Weise können abschnittsweise nur Öffnungen 5 über Injektionsdüsen 3 einer Orientierung freigelassen und alle anderen Öffnungen 5 über Injektionsdüsen 3 anderer Orientierung blockiert werden.

## Beschreibung

Die Erfindung betrifft ein Verfahren zur Injektion eines Fluides in eine Gesteins- oder Erdschicht mittels einer geeigneten Leitung, wobei die Leitung in die Gesteins- oder Erdschicht eingebracht wird, sowie eine Vorrichtung zur Durchführung des Verfahrens. Das Verfahren wird hauptsächlich anhand der Injektion eines Fluides in eine Erdöl-haltige Gesteins- oder Erdschicht zur Förderung von Erdöl beschrieben, ist aber nicht auf derartige Anwendungen eingeschränkt sondern allgemein zur Injektion eines Fluides in eine Gesteins- oder Erdschicht geeignet.

Kontaminierte Gesteins- oder Erdschichten werden häufig mittels Injektion von Fluiden gereinigt oder wieder belebt. Je nach Kontamination werden dabei verschiedene Fluide wie zum Beispiel Gase wie Sauerstoff oder Stickstoff oder chemische Lösungen in die kontaminierten Gesteins- oder Erdschichten eingetragen.

Ein weiteres Anwendungsfeld bei der Injektion von Fluiden in Gesteins- oder Erdschichten ist das Einpressen von gasförmigem Kohlendioxid zur Vermeidung der Luftverschmutzung.

Nach dem Stand der Technik werden dabei Leitungen in die Gesteins- oder Erdschichten eingebracht und das Fluid aus den Leitungen sphärisch in die umgebende Gesteins- oder Erdschicht eingepresst.

Dieses Verfahren nach dem Stand der Technik weist verschiedene Nachteile auf. Zum einen sind kontaminierte Böden häufig lokal unterschiedlich stark kontaminiert. Ein sphärisches Einpressen des Fluides, welches zu einer Gleichverteilung des Fluides in der umgebenden Gesteins- oder Erdschicht führt, bewirkt daher in den Bereichen stärkerer Kontamination eine Unterdosierung und in Bereichen schwächerer Kontamination eine Überdosierung des Reinigungsfluides, welches unter Umständen wiederum negative Folgen für die umgebende Gesteins- oder Erdschicht hat. Bei der Lagerung von Kohlendioxid in Gesteins- oder Erdschichten führen lokale Unterschiede in der Beschaffenheit der Gesteins- oder Erdschichten zu Unterschieden in der Fähigkeit des Gesteins, Kohlendioxid einzulagern. Ein gleichmäßiges sphärisches Einpressen führt somit zu unterschiedlich guter Bindung des Kohlendioxides im Erdreich.

Erdöl befindet sich typischerweise in Erdöllagerstätten nahe und unterhalb der Erdoberfläche. Aus diesen Lagerstätten wird das Erdöl je nach Tiefe der Lagerstätte im Tagebau, wie in den kanadischen Ölsandfeldern, meist jedoch im Tiefbau oder mittels Bohrinseln, die ein Fördern mitten im Meer ermöglichen, gewonnen. Hauptsächlich wird Erdöl im Tiefbau gewonnen. Zu diesem Zweck werden mittels Bohrungen Förderleitungen bis zur Tiefe der Erdöllagerstätte unter die Erdoberfläche eingebracht. Über diese Förderleitung wird das Erdöl aus der Erdöllagerstätte gewonnen.

Die Förderung erfolgt dabei im Wesentlichen in drei Phasen. In größerer Tiefe steht das Erdöl unter dem Druck der auflastenden Erdschichten und des gegebenenfalls assoziierten Erdölbegleitgases. In der ersten Phase lässt sich das Erdöl oft ohne weitere Maßnahmen durch den Eigendruck in der Lagerstätte fördern. Bei Nachlassen des Eigendrucks kann das Öl mit technischen Hilfsmitteln wie Tiefpumpen zutage gefördert werden.

Der Eigendruck der Erdöllagerstätte alleine reicht in der Regel nach einer Förderung von 10% bis 15% der in der Lagerstätte vorhandenen Menge nicht mehr aus, um das Erdöl an die Erdoberfläche zu transportieren. Dieser Phase der primären Erdölförderung schließt sich daher die Phase der Sekundärförderung an. In dieser zweiten Phase wird der Lagerstättendruck durch das Einpressen von Wasser, Dampf oder Gas über, mittels Bohrungen ins Erdreich eingebrachte, Leitungen erhöht. Nach dem Stand der Technik wird in dieser Phase in der Regel Wasser nachgepumpt, wodurch zwischen 30 % und 40 % des ursprünglich in der Lagerstätte vorhandenen Öls (Original Oil In Place oder OOIP) an die Erdoberfläche gefördert werden können. Das restliche, in der Lagerstätte verbleibende, zunehmend zähe und dichte Öl erschwert eine weitere konstante Förderung. Weiteres Öl kann hier nur über spezielle Verfahren aus der Lagerstätte gefördert werden.

In dieser Phase der Erdölförderung werden nach dem Stand der Technik verschiedene Fluide unter Druck mit geeigneten Leitungen in die Nähe bzw. direkt in die Lagerstätte eingepresst. Bekannt sind hierbei u.a. Wärmeverfahren wie das Einpressen von Heißwasser oder Heißdampf oder das Einpressen von Gasen wie Stickstoff und Kohlenstoffdioxid. Kohlenstoffdioxid erhöht zum einen den Druck in der Lagerstätte, löst sich aber zum anderen auch unter geeigneten Bedingungen im Erdöl. Durch das im Erdöl gelöste Kohlendioxid wird die Viskosität des Erdöls deutlich verringert und somit die Förderung verbessert.

Ein derartiges Verfahren zur tertiären Erdölförderung wird in der Patentveröffentlichung GB 2 379 685 beschrieben. Bei dem in GB 2 379 685 beschriebenen Stand der Technik wird parallel zur Förderleitung des Erdöls eine zweite Leitung zur Zuführung eines Fluides in die Erdöllagerstätte eingebracht. Über diese zweite Leitung wird ein Fluid bestehend aus Wasser, Dampf, Dampfschaum oder Schaum, Stickstoff und/oder Kohlendioxid in die Erdöllagerstätte eingepresst. Bevorzugt wird hierbei Wasser oder eine wässrige Lösung bzw. Schaum verwendet. Die Leitung zur Injektion des Fluides, besteht nach dem in GB 2 379 685 offenbarten Stand der Technik aus zwei verschiedenen Abschnitten. Beide Abschnitte sind durch Stopfen, in der Erdölindustrie üblicherweise "Packer" genannt, getrennt und können separat mit dem Fluid beaufschlagt werden. Über die beiden verschiedenen Abschnitte wird das Fluid in die verschiedenen Bereiche der Erdöllagerstätte derart eingepresst, dass die zugeführte Menge des Fluides zyklisch und asynchron variiert. Das Verfahren wird als besonders geeignet für Erdöllagerstätten beschrieben, die in geologischen Formationen vorkommen, welche Brüche oder Spalte aufweisen. Mit Hilfe des in GB 2 379 685 beschriebenen Verfahrens soll der Wasseranteil in dem, über die Förderleitung geförderten, Wasser-Erdöl-Gemisch unterhalb eines bestimmten Grenzwertes gehalten werden. Durch die zyklische Beaufschlagung und die in der Erdöllagerstätte vorhandenen Brüche und Spalten wird verhindert, dass eine zu große Wassermenge in die Förderleitung gelangt. Bei geeigneter Variation der Zuführraten funktionieren die Brüche und Spalten wie Drainagen, die das Wasser aus den umliegenden Schichten ableiten. Die Injektion des Fluides in die Erdöllagerstätte erfolgt dabei einfach über horizontale Löcher in der Zufuhrleitung, welche über den gesamten Umfang der Leitung verteilt sind. Das Fluid wird somit sphärisch gleichmäßig in alle Raumrichtungen verteilt aus der Zufuhrleitung gepresst.

Der vorliegenden Erfindung liegt die Aufgabe zugrunde, ein Verfahren sowie eine Vorrichtung zur Injektion eines Fluides in eine Gesteins- oder Erdschicht derart auszugestalten, dass die Effizienz eines derartigen Verfahrens bzw. einer derartigen Vorrichtung erhöht wird.

Die vorliegende Aufgabe wird verfahrensseitig dadurch gelöst, dass das Fluid unter Druck gerichtet aus der Leitung in die Umgebung gepresst wird.

Der Grundgedanke der Erfindung besteht darin, das Fluid nicht wie im Stand der Technik gleichverteilt in alle Richtungen sphärisch aus der Leitung zu pressen, sondern ein gerichtetes Ausströmen des Fluides zu gewährleisten. Dabei entsteht beispielsweise bei der Injektion eines Fluides in eine Erdöl-haltige Gesteins- oder Erdschicht im Sinne der Erfindung eine eher fingerförmige Ausbreitungsfront von Gas, die das Öl vor sich herschiebt, und nicht wie im Verfahren nach dem Stand der Technik eine kugelförmige Gasfront. Bei einer sphärische Injektion wie im Stand der Technik wird in alle Raumrichtungen in erster Näherung gleich verteilt Druck ausgeübt. Somit wird nach dem Verfahren wie im Stand der Technik nicht nur in Richtung der Förderleitung sondern gleichmäßig verteilt in alle Raumrichtungen Druck auf das Erdöl ausgeübt, d.h. auch in Richtungen vorbei an der Förderleitung. Ausgebeutet werden kann das Erdölfeld aber nur über die Förderleitung. Daher sind nach dem Verfahren nach dem Stand der Technik mehrere Bohrungen nötig, um alle Raumrichtungen abzudecken. Durch das erfindungsgemäße Verfahren kann das Erdölfeld mit einer Förderleitung ausgebeutet werden, da gezielt in Richtung der Förderleitung und nicht in alle Raumrichtungen Druck in das Erdölfeld injiziert werden kann.

Unter einem gerichteten Ausströmen des Fluides wird im Rahmen dieser Erfindung die Strömung des größten Teils des Fluides entlang einer Vorzugsachse verstanden. Ein Ausströmen, bei dem die Fluidmenge gleichverteilt in einem 360° Raumwinkel strömt, d.h. in alle Raumrichtungen gleichmäßig aus der Leitung strömt, ist im Gegensatz dazu ein ungerichtetes Austreten. Bei einem gerichteten Austreten im Sinne der Erfindung ist das Fluid in einem gedachten Kugelvolumen, unmittelbar um das Segment der Leitung aus dem das Fluid strömt, nicht gleichverteilt sondern überwiegend innerhalb eines bestimmten Raumwinkels von maximal 180°. Bei einem derartigen gerichteten Austreten ist das strömende Fluid mindestens innerhalb eines Halbkugel-Segmentes meist jedoch innerhalb eines Kegel-Segmentes innerhalb des gedachten Kugelvolumens um die Leitung beschränkt.

Im Stand der Technik wird das Fluid einfach über Löcher, welche über den Umfang der Leitung gleichverteilt sind, ungerichtet aus der Druckleitung in die umgebende Gesteins- oder Erdschicht gepresst. Aufgrund des großen Druckunterschiedes zwischen der Druckleitung zur Fluidzufuhr und dem umgebenden Gestein wird davon ausgegangen, dass sich das Fluid sphärisch und gleichmäßig verteilt von der Leitung in die umliegende Umgebung ausbreitet. Untersuchungen in der Praxis zeigen jedoch, dass dies nicht der Fall ist. Eine gleichmäßige Ausbreitung des Fluides von der Leitung in alle Raumrichtungen setzt eine annähernd gleiche Beschaffenheit der geologischen Umgebung der Druckleitung voraus. Dies ist jedoch in den meisten geologischen Umgebungen nicht der Fall.

Überraschenderweise hat sich gezeigt, dass bei dem erfindungsgemäßen gerichteten Austreten des Fluides aus der Leitung, die Richtungscharakteristik erhalten bleibt. Aufgrund des großen Druckverlustes in der Gesteins- oder Erdschicht würde man erwarten, dass auch bei gerichtetem Ausströmen aus der Leitung die Ausbreitung des Fluides in der Gesteins- oder Erdschicht schon nach kurzer Zeit wieder kugelförmig erfolgen würden. Neue Messungen zeigen jedoch, dass dies nicht der Fall ist und ein gerichtetes Einpressen des Fluides in die umgebende Gesteins- oder Erdschicht im Sinne der Erfindung auch zu einer gerichteten Ausbreitung des Fluides in der Gesteins- oder Erdschicht führt, die auch über größere Strecken von über 200 m erhalten bleibt.

In der Regel werden eine oder mehrere Druckleitungen zum Einpressen des Fluides verwendet, wobei ein Effekt an davon räumlich beabstandeten Punkten, wie beispielsweise eine oder mehrere Förderleitungen, erzielt werden soll. Der Erfolg beim Einpressen eines Fluides in eine geologische Umgebung ergibt sich dabei nicht zwangsläufig. Bei der Anwendung eines derartigen Verfahrens zur tertiären Erdölförderung beispielsweise lässt sich ein Effekt im Sinne einer erhöhten Förderung von Erdöl in der Förderleitung oft erst nach mehreren Wochen und einem hohen Fluidverbrauch feststellen. Im ungünstigsten Fall breitet sich das Fluid in der von der Förderleitung weg gelegenen Richtung deutlich besser aus als in der Richtung zur Förderleitung. In einem derartigen Fall wird nach einem Verfahren nach dem Stand der Technik eine große Menge Fluid verbraucht, möglicherweise ohne dabei eine erhöhte Förderleistung zu erzielen.

Durch das erfindungsgemäße Verfahren können die Effekte durch die Fluidinjektion in eine geologische Umgebung deutlich früher detektiert werden. Gemäß dem erfindungsgemäßen Verfahren wird das Fluid gerichtet aus der Druckleitung in die Umgebung gepresst. Hierbei kann das Fluid zu einem Punkt gerichtet werden, wo der mutmaßliche Effekt erzielt werden soll, wie beispielsweise die Förderleitung bei der tertiären Erdölförderung. In diesem Fall breitet sich das Fluid in Richtung der Förderleitung deutlich schneller aus als bei einem Verfahren nach dem Stand der Technik. Durch die erfindungsgemäße Richtung der Einpressung des Fluides wird bei gleicher eingepresster Fluidmenge deutlich mehr Fluid in die Richtung der Förderleitung eingepresst als bei dem sphärischen Einpressen nach einem Verfahren wie im Stand der Technik. Der Effekt an einer Förderleitung zur tertiären Erdölförderung ist nach dem erfindungsgemäßen Verfahren somit deutlich früher bemerkbar. Zusätzlich wird der Verbrauch an eingepresstem Fluid reduziert. Dies macht sich besonders bei Ölfeldern bemerkbar, bei denen das Fluid nicht in unmittelbarer Nähe in ausreichender Menge vorhanden ist. Schon bei einem gerichteten Austreten, bei dem das Fluid innerhalb einer Halbkugel in einem Raumwinkel von 180° ausströmt, verringert sich die Menge an benötigtem Fluid drastisch. Werden bei sphärischen Ausströmen beispielsweise 1000 m³ Fluid benötigt, um einen Fördereffekt zu erreichen, werden bei einem gerichteten Ausströmen innerhalb der Halbkugel nur noch 500m³ für den gleichen Effekt benötigt.

Durch das erfindungsgemäße Verfahren können somit auch kontaminierte Böden deutlich effizienter gereinigt werden. Das Fluid kann je nach Kontaminationsgrad unterschiedlich stark in die unterschiedlichen Bereich gepresst werden. Bei der Lagerung von Kohlendioxid in Gesteins- oder Erdschichten kann das Kohlendioxid gezielt in Regionen hoher Speicherfähigkeit gepresst werden.

Das erfindungsgemäße Verfahren ist insbesondere zur Injektion eines Fluides in eine Erdöl-haltige Gesteins- oder Erdschicht geeignet.

Ein gerichtetes Einpressen des Fluides in die Gesteins- oder Erdschicht kann erfindungsgemäß auf mehrere Arten erreicht werden. Die einfachste Möglichkeit um ein gerichtetes Einpressen im Sinne der Erfindung zu gewährleisten sind einseitige Löcher in der Leitung, d.h. die Leitung weist lediglich über einen Teil Umfangs, maximal den halben Umfang verteilt Löcher zum Fluidaustritt auf. Weitere bevorzugte Ausgestaltungen der Erfindungen werden im Folgenden beschrieben.

In einer bevorzugten Ausgestaltung der Erfindung wird das Fluid über eine Injektionsdüse aus der Leitung in die Umgebung gepresst wird. Injektionsdüsen sind im Stand der Technik erprobte Mittel, um einen gerichteten Fluidstrom zu etablieren. Vorteilhafterweise wird dabei das Fluid überwiegend innerhalb eines Raumwinkels von 90°, bevorzugt 45°, besonders bevorzugt zwischen 10° und 30°, in die Umgebung der Leitung gepresst. Je schmaler der Raumwinkel ist, der durch das austretende Fluid gebildet wird, desto besser ist die Richtwirkung des Fluides. Entsprechend kann entlang einer bestimmten ausgewählten Richtung in der geologischen Umgebung der Druckleitung viel mehr Fluid eingebracht werden als bei einer sphärischen Gleichverteilung. Umgekehrt wird für den gleichen Effekt entlang einer bestimmten Raumrichtung deutlich weniger Fluid verbraucht.

Vorteilhafterweise wird die Ausströmungsrichtung, bevorzugt der Winkel zwischen Hauptachse der Leitung und Ausströmungsrichtung, des Fluides zeitlich, bevorzugt schrittweise, verändert. Durch die schrittweise Variation des Winkels zwischen Hauptachse der Leitung und Fluidaustritt lassen sich besonders schnell die geologischen Gegebenheiten herausfinden, wo der größte gewünschte Effekt durch die Fluidzufuhr erreicht wird. Zudem ist auf diese Weise beispielsweise möglich, das Fluid von einem Injektionspunkt aus in das gesamte Erdölfeld zu pressen. So lässt sich das gesamte Feld mit geringem Aufwand ausbeuten. Die Zahl der Bohrungen gegenüber einem Verfahren nach dem Stand der Technik kann verringert werden. Der Winkel wird dabei bevorzugt über die Steuerung der Orientierung der freibeweglichen Düse verändert.

Vorteilhafterweise ist die Ausströmrichtung des Fluides an der Struktur des Gesteins in der Umgebung ausgerichtet, weicht bevorzugt nicht mehr als 45° von der Gesteinsstruktur ab, und ist besonders bevorzugt parallel zur Gesteinsstruktur orientiert.

Die Erfindung wird bevorzugt zum Einpressen von Gasen wie Sauerstoff, Stickstoff und/oder Kohlendioxid und/oder zum Einpressen von gasförmigen und/oder flüssigen chemischen Lösungen verwendet.

Bei der Anwendung des erfindungsgemäßen Verfahrens zur tertiären Erdölförderung werden bevorzugt Stickstoff oder Kohlendioxid im gasförmigen Zustand als Fluid verwendet. Ebenso vorteilhaft ist hier die Verwendung von Kohlendioxid als Flüssiggas im überkritischen Zustand als Fluid. Bei der Verwendung von Stickstoff oder Kohlendioxid kommen die Vorteile des erfindungsgemäßen Verfahrens besonders zum Tragen. Beide Gase müssen für die tertiäre Erdölförderung extra bereitgestellt werden. Dies ist beispielsweise bei der Erdölförderung über Förderplattformen im Meer schwierig. Hier müssen die Gase in Tanks per Schiff zu den Förderplattformen transportiert werden. Durch das erfindungsgemäße gerichtete Einpressen der Gase wird bei gleichem Effekt eine deutliche Menge Gas eingespart. Bei Einpressen des Gases mit einem gerichteten Kegel innerhalb eines Raumwinkels von 20° wird im Vergleich zum sphärischen Einpressen in einen Raumwinkel von 360° nur eine um mehrere Größenordnungen kleinere Gasmenge benötigt. Dies reduziert die per Schiff zu liefernde Menge Gas bei einer Förderplattform drastisch und führt zu einer erheblichen Kostenersparnis.

In einer anderen Ausgestaltung der Erfindung wird über zwei verschiedene Leitungen Fluid gerichtet eingepresst, wobei die Einpressrichtung des Gases der ersten Leitung einen Winkel zur Einpressrichtung des Fluides der zweiten Leitung aufweist. In dieser Ausgestaltung der Erfindung ist es bei geeignetem Winkel möglich, Öl, das durch das Einpressen des Fluides über die erste Leitung in eine Richtung zwischen der Förderleitung und der zweiten Leitung getrieben wird, durch das gerichtete Einpressen von Fluid über die zweite Leitung in Richtung der Förderleitung zu pressen.

Vorteilhafterweise wird über eine erste Leitung und über eine zweite Leitung Fluid in eine Erdöl-haltige Gesteins- oder Erdschicht eingepresst, wobei die zweite Leitung nicht auf der Verbindungslinie zwischen der ersten Leitung und der Förderleitung liegt, und das Fluid aus der zweiten Leitung derart gerichtet eingepresst wird, dass Öl, welches durch gerichtetes Einpressen von Fluid aus der ersten Leitung verdrängt wird, in Richtung der Förderleitung verdrängt wird.

Als besonders vorteilhaft hat sich erwiesen, den Winkel zwischen Einpressrichtung des Fluides aus der ersten Leitung und der Verbindungslinie zwischen erster Leitung und Förderleitung derart zu verändern, das nacheinander der Winkelbereich zwischen der Verbindungslinie von erster Leitung und Förderleitung und der Verbindungslinie von erster Leitung und zweiter Leitung überstrichen wird. In dieser Ausgestaltung der Erfindung kann mit zwei Leitungen zum gerichteten Einpressen von Gas und einer Förderleitung das gesamte Öl in dem Dreieck, welches durch die drei Leitungen gebildet wird, gezielt ausgebeutet werden. Durch das Einpressen des Fluides aus der zweiten Leitung wird der erste Fluidstrom derart abgelenkt, dass das Öl von jedem Punkt innerhalb des Dreieckes immer in Richtung der Förderleitung gepresst wird. Das Einpressen des Fluides aus der ersten Leitung in einem beliebigen Winkel zwischen den Verbindungslinien zwischen erster Leitung und Förderleitung bzw. zwischen erster Leitung und zweiter Leitung treibt das Öl weg von der ersten Leitung und quasi vorbei an der Förderleitung. Durch das überlagerte Einpressen von Fluid aus der zweiten Leitung wird diese Abweichung aber wieder in Richtung der Förderleitung korrigiert.

Besonders vorteilhaft ist das dynamische Einpressen des Fluides, wobei das Einpressen mittels Druckstoß besonders bevorzugt wird. Um die Leitung ist naturgemäß häufig kein ungestörtes sondern eher zerbröckeltes Gestein. Wird das Fluid dynamisch, bevorzugt als kurzzeitiger Druckstoß, eingepresst und dieser Vorgang mehrfach wiederholt, wird das Gestein am Injektionspunkt weggeblasen und in unmittelbarer Umgebung des Injektionspunktes verdichtet. So entsteht unmittelbar vor dem Injektionspunkt ein freier Raum. Das dort ursprünglich vorhandene Gestein führt zur Verdichtung in unmittelbarer Umgebung des Injektionspunktes. Auf diese Weise wird zusätzlich um den Injektionspunkt eine Art Düse im Gestein erzeugt, wodurch sich das gerichtete Ausströmen des Gases verbessert.

Vorrichtungsseitig wird die gestellte Aufgabe dadurch gelöst, dass die Leitung im Bereich der Gesteins- oder Erdschicht Mittel aufweist, welche geeignet sind, das Fluid gerichtet aus der Leitung strömen zu lassen.

In einer Ausgestaltung der Erfindung besteht die Leitung aus einem Innenrohr und einem Außenrohr, wobei das Innenrohr mindestens eine Injektionsdüse aufweist, welche in Strömungsverbindung mit dem unter Druck stehenden Fluid steht, und das Außenrohr an Stellen, wo sich auf dem Innenrohr Injektionsdüsen befinden, mit, bevorzugt schlitzförmigen, Öffnungen versehen ist. Über die Injektionsdüsen am Innenrohr, welches in Strömungsverbindung mit dem unter Druck stehenden Fluid steht, wird das Fluid durch die Öffnungen im Außenrohr gerichtet in die umgebende Gesteinsschicht gepresst.

In einer anderen Ausgestaltung der Erfindung weist die Leitung Öffnungen auf, die nur über einen Teil des Umfangs der Leitung angeordnet und bevorzugt schlitzförmig sind.

Vorteilhafterweise befinden sich die Injektionsdüse/n oder die Öffnung/en zwischen benachbarten Packern. Die Packer, die auf der Leitung oder dem Außenrohr, frei beweglich sind, erlauben Öffnungen mit Injektionsdüsen oder Öffnung zu blockieren und somit Gebiete und Einpressrichtungen auszuwählen.

Besonders bevorzugt wird die erfindungsgemäße Vorrichtung zur tertiären Erdölförderung verwendet.

Die vorliegende Erfindung weist eine Reihe von Vorteilen auf. Durch das gerichtete Einpressen des Fluides in die umgebende Gesteins- oder Erdschicht kann die Menge Fluid, die in eine kontaminierte Gesteins- oder Erdschicht eingetragen wird, lokal sehr gut gesteuert werden. Dabei kann ein ganzer kontaminierter Bereich durch das gerichtete Einpressen des Fluides mit einer einzigen Leitung lokal mit unterschiedlichen Fluidmengen beaufschlagt werden. Der gesamte Fluidverbrauch bei der Reinigung kontaminierter Böden sinkt somit. Bei der Verwendung des erfindungsgemäßen Verfahrens zur Lagerung von gasförmigem Kohlendioxid unter der Erdoberfläche können gezielt Bereiche mit guter Lagerfähigkeit ausgewählt werden.Durch das gerichtete Einpressen des Fluides in eine Erdöl-haltige Gesteins- oder Erdschicht können deutlich schneller als im Stand der Technik Effekte an der Förderleitung bei der tertiären Erdölförderung erzielt werden. Die oftmals offene Frage, ob sich durch das Einpressen eines Fluides eine Erhöhung der Fördermenge in dem jeweiligen Erdölfeld erreichen lässt, kann durch das erfindungsgemäße Verfahren und die erfindungsgemäße Vorrichtung deutlich früher beantwortet werden. Zusätzlich lassen sich die Effekte mit einer deutlich geringeren Menge an eingesetzten Fluid erreichen. Dies führt bei Fluiden die erzeugt oder beschafft werden müssen zu einer deutlichen Kosteneinsparung bei der tertiären Erdölförderung.

Im Folgenden soll die Erfindung anhand des in der Figur dargestellten Ausführungsbeispieles näher erläutert werden.

### Es zeigen

- Figur 1: Gasverteilung bei sphärischen Einpressen nach dem Stand der Technik
- Figur 2: Gasverteilung bei erfindungsgemäßen gerichtetem Einpressen
- Figur 3: Ausgestaltung der Erfindung mit zwei Leitungen und einer Förderleitung
- Figur 4: ein Ausführungsbeispiel der erfindungsgemäßen Vorrichtung

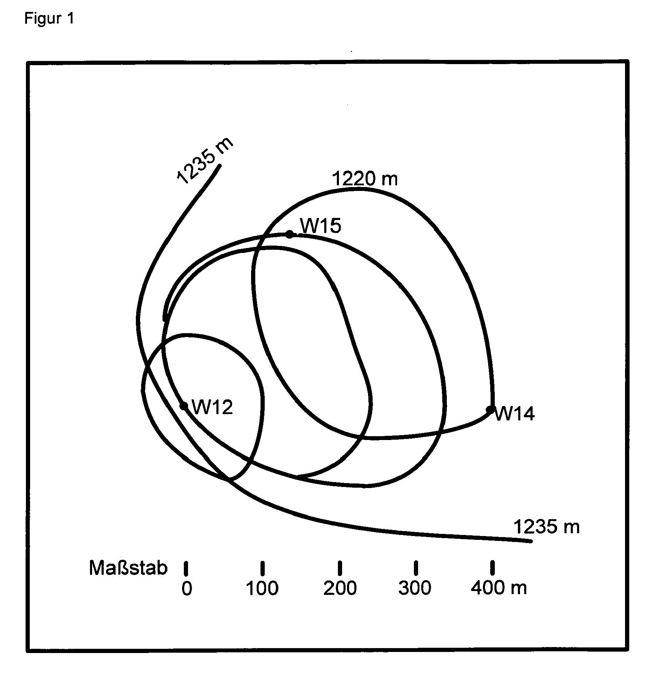

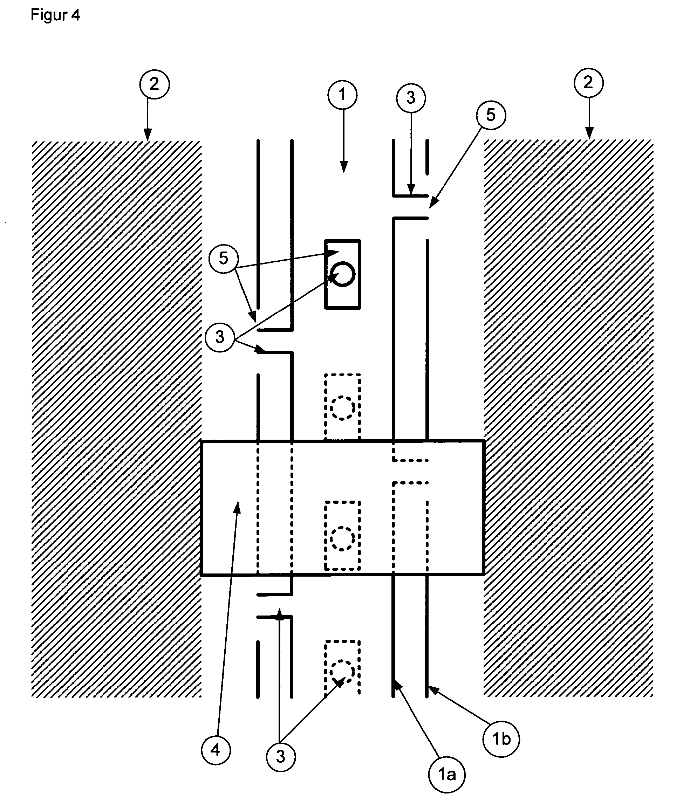

In den Figuren 1 bis 3 wird die Erfindung bzw. der Stand der Technik am Beispiel des Einpressen eines Fluides in eine Erdöl-haltige Gesteins- oder Erdschicht erläutert. Das in Figur 4 dargestellte Ausführungsbeispiel der erfindungsgemäßen Vorrichtung ist sowohl zum Einpressen eines Fluides in eine beliebige als auch in eine Erdöl-haltige Gesteins- oder Erdschicht geeignet.

Figur 1 zeigt die Gasverteilung bei sphärischem Einpressen nach dem Stand der Technik über die Injektionsleitung W12. Sichtbar ist die ungerichtete Gasausbreitung, die weder in Richtung der Förderleitung W15 noch in Richtung der Förderleitung W14 erfolgt.

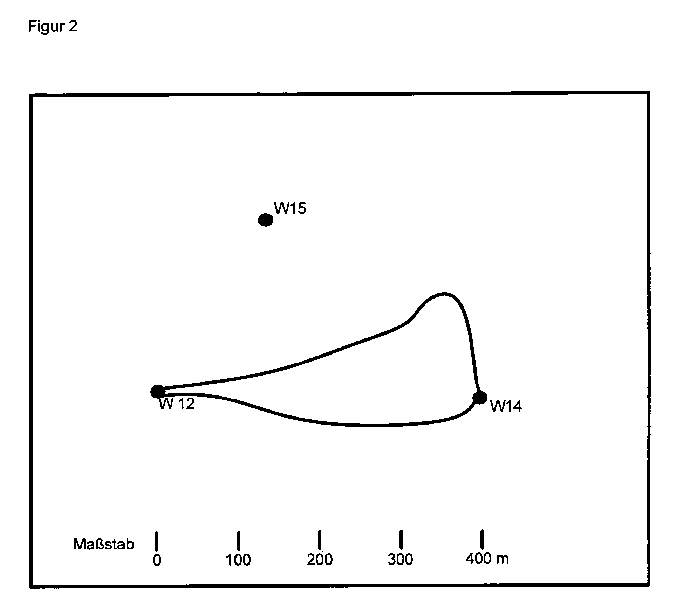

Figur 2 zeigt das erfindungsgemäße gerichtete Einpressen von Gas aus der Leitung W12 in Richtung der Förderleitung W14. Die eingepresste Gasmenge ist dabei deutlich kleiner als im Stand der Technik.

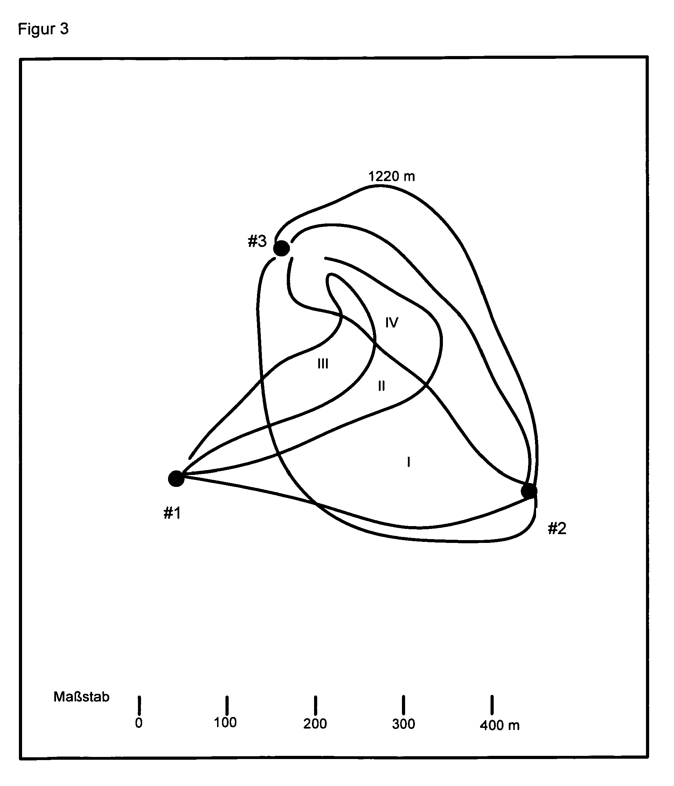

Figur 3 zeigt eine Ausgestaltung des erfindungsgemäßen Verfahrens. Über die Leitung #1 wird durch das gerichtete Einpressen in die Sektionen I, II und III das Öl in eine Ebene zwischen der Förderleitung #3 und der zweiten Leitung #2 gepresst. Durch das gerichtete Einpressen in Sektion IV aus Leitung #2 kann das gesamte Restöl über die Förderleitung #3 ausgebeutet werden. In dieser Ausgestaltung der Erfindung lässt sich das gesamte Öl in dem Bereich zwischen den drei Leitungen über eine einzige Förderleitung #3 ausbeuten. Zuerst wird über die Leitung #1 Fluid über eine längere Zeit in die Region I gepresst. Durch das anschließende, gleichzeitige, überlagerte Einpressen von Fluid aus Leitung #1 in die Region I und aus Leitung #2 in die Region IV, wird das Öl aus dem Bereich I in Richtung der Förderleitung #3 verdrängt. Anschließend wird auf gleiche Art und Weise das Erdöl aus den Bereichen II und III in Richtung der Förderleitung verdrängt. Hierbei kann allerdings die Zeit des ausschließlichen Einpressens in die Regionen II bzw. III gegenüber der Zeit des ausschließlichen Einpressens in die Region I verkürzt werden. Es hat sich gezeigt, dass das Fluid für eine gewisse Zeitspanne im Gestein gespeichert bleibt. Durch den Überlapp der einzelnen Regionen sind daher für die Regionen, in die später Fluid gepresst wird, weniger lange Einpresszeiten notwendig.

Figur 4 zeigt eine Ausgestaltung der erfindungsgemäßen Vorrichtung mit einem Abschnitt einer Leitung 1 mit einem Innenrohr 1 a und einem Außenrohr 1 b in einer Gesteins- oder Erdschicht 2. Das Innenrohr 1a ist mit Injektionsdüsen 3 versehen. Die Injektionsdüsen 3 sind gerichtet und gewährleisten somit über die Öffnungen 5 im Außenrohr 1 b ein gerichtetes Einpressen des Fluides in die umgebende Gesteins- oder Erdschicht 2. Im Inneren des Innenrohres 1a befinden sich Mittel (nicht dargestellt) die eine selektive Beaufschlagung der einzelnen Injektionsdüsen 3 erlauben. Gemäß der Erfindung wird das Fluid gerichtet in die umgebende Gesteins- oder Erdschicht eingepresst. So können zum Beispiel nur alle in der Zeichnung nach rechts gerichtet dargestellten Injektionsdüsen 3 mit dem Fluid beaufschlagt werden. Alternativ können die Öffnungen 5 über den Injektionsdüsen 3 auch mittels der Packer 4 blockiert bzw. freigelassen werden. In dieser Ausgestaltung der Erfindung sind die Packer 4 aufblasbare Gassäcke. Diese können im unaufgeblasenen Zustand frei über das Außenrohr 1 b bewegt werden. Im aufgeblasenen Zustand füllen sie den Raum zwischen Außenrohr 1 b und Gesteins- oder Erdschicht 2 aus und blockieren dabei die Öffnungen 5 über den Injektionsdüsen 3. Auf diese Weise können abschnittsweise nur Öffnungen 5 über Injektionsdüsen 3 einer Orientierung freigelassen und alle anderen Öffnungen 5 über Injektionsdüsen 3 anderer Orientierung blockiert werden.

Bei einer alternative Ausgestaltung der Erfindung (nicht dargestellt) werden anstelle der Injektionsdüsen 3 einfache, schlitzförmige Öffnungen verwendet. Dabei weist jeder Teilabschnitt der Leitung 1 nur schlitzförmige Öffnungen auf einen Teil seines Umfanges auf. Mit Hilfe von Packern 4 können somit Öffnungen mit gegebener Orientierung der Leitung 1 zur Gesteins- oder Erdschicht 2 blockiert oder freigelassen werden. In dieser Ausgestaltung der Erfindung bietet das dynamische Einpressen des Fluides besonders viele Vorteile. Zur Verbesserung der gerichteten Strömung wird das Fluid zunächst als Druckstoß, d. h. unter hohem Druck, eingepresst. Danach lässt man den Druckstoß abklingen und wiederholt diesen Vorgang mehrere Male. Dadurch wird zerbröckeltes Gestein um den Schlitz in der Leitung weggeblasen, so dass unmittelbar vor dem Schlitz ein relativ freier Raum entsteht. Um diesen Raum herum dagegen verdichtet sich das Material, da das zerbröckelte Gestein vor dem Schlitz durch den Druckstoß verdrängt wird. Auf diese Weise wird im Gestein um den Schlitz eine Art Düse im Gestein selbst erzeugt, die die Richtwirkung des Einpressen noch deutlich verbessert.

## Patentansprüche

1. Verfahren zur Injektion eines Fluides in eine Gesteins- oder Erdschicht (2) mittels einer geeigneten Leitung (1, W12, #1, #2), wobei die Leitung (1, W12, #1, #2) in die Gesteins- oder Erdschicht (2) eingebracht wird, **dadurch gekennzeichnet, dass** das Fluid unter Druck gerichtet aus der Leitung (1, W12, #1, #2) in die Umgebung gepresst wird.

2. Verfahren nach Anspruch 1, **dadurch gekennzeichnet, dass** das Fluid in eine Erdöl-haltige Gesteins- oder Erdschicht (2) eingebracht wird.

3. Verfahren nach Anspruch 1 oder 2, **dadurch gekennzeichnet, dass** das Fluid über eine Injektionsdüse (3) aus der Leitung (1, W12, #1, #2) in die Umgebung gepresst wird.

4. Verfahren nach einem der Ansprüche 1 bis 3, **dadurch gekennzeichnet, dass** überwiegend innerhalb eines Raumwinkels von 90°, bevorzugt 45°, besonders bevorzugt zwischen 10° und 30°, in die Umgebung der Leitung (1, W12, #1, #2) gepresst wird.

5. Verfahren nach einem der Ansprüche 1 bis 3, **dadurch gekennzeichnet, dass** die Ausströmungsrichtung, bevorzugt der Winkel zwischen Hauptachse der Leitung (1, W12, #1, #2) und Ausströmungsrichtung, des Fluides zeitlich, bevorzugt schrittweise, verändert wird.

6. Verfahren nach einem der Ansprüche 1 bis 5, **dadurch gekennzeichnet, dass** Stickstoff oder Kohlendioxid im gasförmigen Zustand als Fluid verwendet werden.

7. Verfahren nach einem der Ansprüche 1 bis 6, **dadurch gekennzeichnet, dass** die Ausströmrichtung des Fluides an der Struktur des Gesteins in der Umgebung ausgerichtet ist, bevorzugt nicht mehr als 45° von der Gesteinsstruktur abweicht, besonders bevorzugt parallel zur Gesteinsstruktur orientiert ist.

8. Verfahren nach einem der Ansprüche 2 bis 7, **dadurch gekennzeichnet, dass** über zwei verschiedene Leitungen (1, W12, #1, #2) Fluid gerichtet eingepresst wird, wobei die Einpressrichtung des Fluides der ersten Leitung (#1) einen Winkel zur Einpressrichtung des Fluides der zweiten Leitung (#2) aufweist.

9. Verfahren nach Anspruch 8, **dadurch gekennzeichnet, dass** über eine erste Leitung (#1) und über eine zweite Leitung (#2) Fluid in eine Erdöl-haltige Gesteins- oder Erdschicht (2) eingepresst, wobei die zweite Leitung (#2) nicht auf der Verbindungslinie zwischen der ersten Leitung (#1) und der Förderleitung (#3) liegt, und das Fluid aus der zweiten Leitung (#2) derart gerichtet eingepresst wird, dass Öl, welches durch gerichtetes Einpressen von Fluid aus der ersten Leitung (#1) verdrängt wird, in Richtung der Förderleitung (#3) verdrängt wird.

10. Verfahren nach Anspruch 9, **dadurch gekennzeichnet, dass** der Winkel zwischen Einpressrichtung des Fluides aus der ersten Leitung (#1) und der Verbindungslinie zwischen erster Leitung (#1) und Förderleitung (#2) derart verändert wird, dass nacheinander der Winkelbereich zwischen der Verbindungslinie von erster Leitung (#1) und Förderleitung (#3) und der Verbindungslinie von erster Leitung (#1) und zweiter Leitung (#2) überstrichen wird.

11. Verfahren nach einem der Ansprüche 1 bis 10, **dadurch gekennzeichnet, dass** das Fluid dynamisch, bevorzugt als Druckstoß, eingepresst wird.

12. Vorrichtung zum Einpressen eines Fluides in eine Gesteins- oder Erdschicht (2), wobei die Vorrichtung eine geeignete Leitung (1) aufweist, welche in die Gesteins- oder Erdschicht (2) eingebracht ist, **dadurch gekennzeichnet, dass** die Leitung im Bereich der Gesteins- oder Erdschicht Mittel (3) aufweist, welche geeignet sind, das Fluid gerichtet aus der Leitung (1) strömen zu lassen.

13. Vorrichtung nach Anspruch 12, **dadurch gekennzeichnet, dass** die Leitung (1) aus einem Innenrohr (1a) und einem Außenrohr (1b) besteht, wobei das Innenrohr mindestens eine (1a) Injektionsdüsen (3) aufweist, welche in Strömungsverbindung mit dem unter Druck stehenden Fluid steht, und das Außenrohr (1 b) an Stellen, wo sich auf dem Innenrohr (1 a) Injektionsdüsen (3) befinden, mit, bevorzugt schlitzförmigen, Öffnungen versehen ist.

14. Vorrichtung nach Anspruch 12 oder 13, **dadurch gekennzeichnet, dass** die Leitung (1) Öffnungen (5) aufweist, die nur über einen Teil des Umfangs der Leitung (1) angeordnet und bevorzugt schlitzförmig sind

15. Vorrichtung nach einem der Ansprüche 12 bis 14, **dadurch gekennzeichnet, dass** die Injektionsdüse/n (3) oder die Öffnunglen (5) zwischen benachbarten Packern (4) befinden.
